Europäisches Patentamt

European Patent Office

Office européen des brevets

(11) Veröffentlichungsnummer: **0 011 764**

**A1**

(12) EUROPÄISCHE PATENTANMELDUNG

(21) Anmeldenummer: **79104464.7**

(22) Anmeldetag: **13.11.79**

(51) Int. Cl.³: **B 65 G 23/38**

(30) Priorität: **23.11.78 DE 2850727**

(43) Veröffentlichungstag der Anmeldung:
**11.06.80 Patentblatt 80/12**

(84) Benannte Vertragsstaaten:
**AT CH FR IT NL**

(71) Anmelder: **C. KELLER GMBH u. CO. KG**
**Carl-Keller-Strasse 2-10**
**D-4530 Ibbenbüren 2(DE)**

(72) Erfinder: **Keck, Dieter**
**Thunacker 36**
**D-4530 Ibbenbüren 2(DE)**

(54) Antrieb für ein intermittierend antreibbares Förderband zum Gruppieren von keramischen Formlingen, insbesondere Spaltplatten.

(57) Bei einem Antrieb für ein intermittierend antreibbares Förderband (2) wirken auf eine Antriebswelle (1) zwei Motoran (3, 4) ein. Die Antriebswelle ist beidseitig mit je einem Hebel (9, 10) versehen, die mittels Freiläufen (7, 8) auf der Antriebswelle angeordnet sind. Die Febel stehen mit jeweils einem der Motoren über jeweils einen Kurbeltrieb (5, 6) in Verbindung.

Die Motoren (3,4) werden wechselweise für die Bewegung des Förderbandes derart in Tätigkeit gesetzt, daß zuerst der erste Motor (3) während des Vorlaufes das Förderband antreibt, während der zweite Motor (4) sich im Rücklauf befindet und über den Freilauf (8) nicht auf die Antriebswelle (1) einwirkt. Danach treibt der zweite Motor (4) das Förderband (2) dadurch an, daß aus der Rücklauf- in die Vorlaufstellung überwechselt und der erste Motor (3) seine Drehrichtung ebenfalls wechselt und über den Freilauf (7) nicht auf die Antriebswelle (1) einwirkt. Dadurch wird das Förderband während der Taktzeiten entsprechend dem eingestellten Programm immer in Bewegung gehalten. Das Förderband (2) wird lediglich angehalten, um Formlinge (11) vom Förderband (12) auf das Förderband (2) umsetzen zu können.

.../...

Fig. 2

0011764

- 1 -

C. KELLER GMBH u. CO. KG
Carl-Keller-Straße 2 - 10
4530 Ibbenbüren 2


Antrieb für ein intermittierend antreibbares Förderband
zum Gruppieren von keramischen Formlingen, insbesondere
Spaltplatten

Die Erfindung bezieht sich auf einen Antrieb für ein intermittierend antreibbares Förderband zum Gruppieren von
keramischen Formlingen, insbesondere Spaltplatten, mit
auf die Antriebswelle einwirkenden Motor.

Bekannt ist ein Spezialmotor als Antrieb, der direkt auf
die Antriebswelle wirkt und der wegen der geringen Standfestigkeit der zu transportierenden keramischen Formlinge mit einem Weichenlauf bzw. Schleichgang oder zusätzlich angeordneten Schwungmassen versehen sein muß.

Dieser Spezialmotor ist jedoch sehr teuer und außerordentlich störempfindlich, da der Motor einer hohen Belastung
infolge der hohen Schalthäufigkeit unterworfen ist. Auch
werden die Bremsen wegen der für den Weichenlauf notwendigen Schwungmassen über die Maßen beansprucht und müssen des
hohen Verschleißes wegen häufig ausgewechselt werden. Nachteilig ist noch, daß der Spezialmotor bei Laständerung, z.
B. bei einem leeren oder bei einem vollen Förderband, ein
wechselndes Arbeitsverhalten zeigt. Auch ist die Stromaufnahme sehr groß. Da das Gruppieren verschiedener Formlingsformat nach verschiedenen Programmen (verschiedene Abstände
zwischen den Formlingen) erfolgt, muß der Spezialmotor mit Die Aufgabe der Erfindung liegt nun darin, einen Antrieb für ein intermittierend antreibbares Förderband zum Gruppieren von keramischen Formlingen, insbesondere Spaltplatten zu schaffen, der ohne Spezialmotor auskommt und bei dem normale Motoren verwendet werden können.

Diese Aufgabe wird erfindungsgemäß durch die im kennzeichnenden Teil des Patentanspruchs 1 beschriebenen Merkmale gelöst.

Es können nunmehr Normalmotoren verwandt werden, deren Störanfälligkeit wesentlich geringer ist. Da die Schalthäufigkeit nur noch die halbe Wertzahl beträgt und die Motoren dadurch weniger belastet werden, ist die Lebensdauer der Motoren höher. Ein Weichablauf ist nicht erforderlich, da dies durch die Kurbeltriebe erreicht wird.

Ein weiteres Merkmal der Erfindung ist Gegenstand des Anspruchs 2. Durch das stufenlose Verstellen der Kurbeltriebe im Hebel ist das gewünschte Programm einstellbar. Ein Programmwerk ist nicht erforderlich.

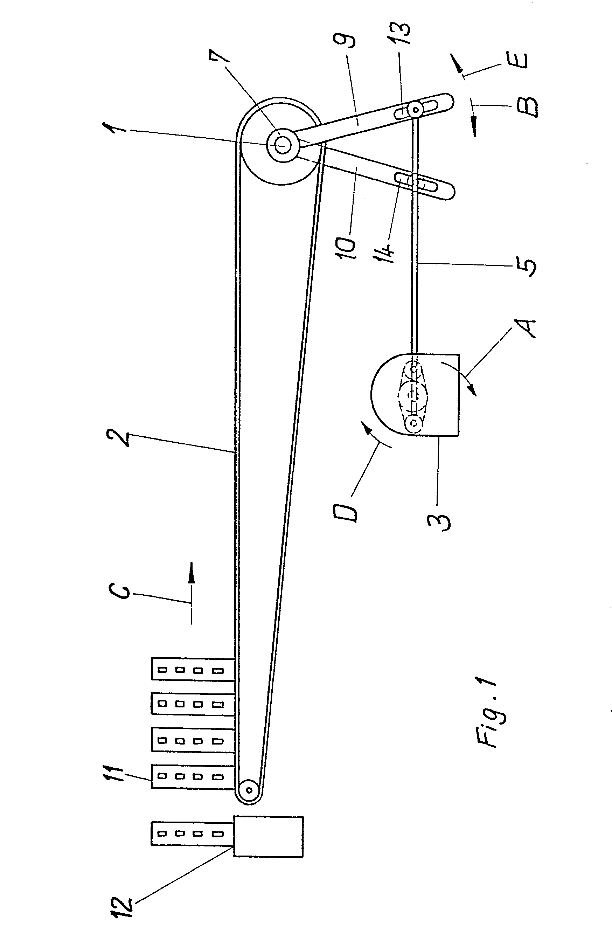

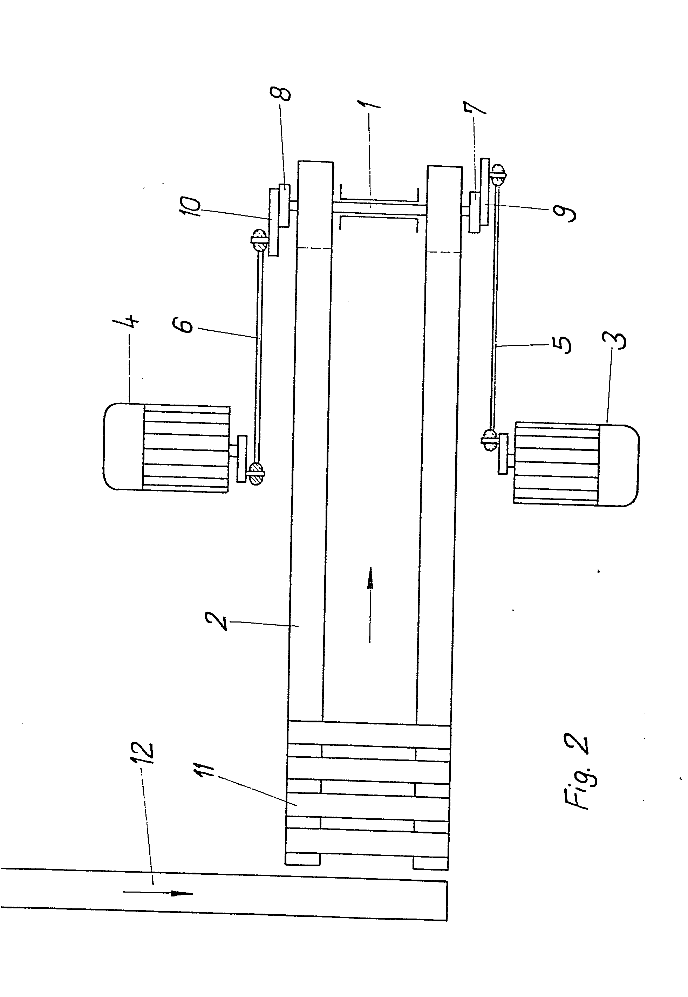

In der Zeichnung ist ein Ausführungsbeispiel des Gegenstandes der Erfindung näher veranschaulicht. Es zeigt Fir. 1 eine Ansicht des Antriebes an einem Förderband und Fig. 2 eine Draufsicht auf den Antrieb gemäß Fig. 1.

Der Antrieb wirkt beidseitig auf eine Antriebswelle 1 eines Förderbandes 2 ein und besteht aus Normalmotoren 3,4, Kurbeltrieben 5,6 und mittels Freiläufen 7,8 auf der Antriebswelle 1 befestigten Hebeln 9,10.

Die Motoren 3,4 bewegen die Kurbeltriebe 5,6 in Richtung des Pfeiles A im Vorlauf von der in der Fig. 1 dargestellten Stellung in die in gestrichelter Weise dargestellten Stellung, wobei auch die Hebel 9,10 in Richtung des Pfeiles B unter Mitnahme des Förderbandes 2 in Richtung des Pfeiles C bewegt werden.

Der Rücklauf der Kurbeltriebe 5,6 geschieht nun in Richtung des Pfeiles D, wobei die Hebel 9,10 in Richtung des Pfeiles E bewegt werden. Da bei dieser Bewegung die Freiläufe zwischen Hebel 9,10 und Antriebswelle 1 zum Tragen kommen, bewegt sich das Förderband 2 nicht und steht still.

Zum Betrieb des Förderbandes 2 werden die Motoren 3,4 wechselweise für die Bewegung des Förderbandes 2 in Tätigkeit gesetzt, und zwar geschieht dies derart, daß zuerst der Motor 3 während des Vorlaufes in Richtung des Pfeiles A das Förderband 2 antreibt, während der Motor 4 sich im Rücklauf in Richtung des Pfeiles D befindet und über den Freilauf 8 nicht auf die Antriebswelle 1 einwirkt. Danach treibt der Motor 4 das Förderband 2 an, und zwar dadurch, daß der Motor 4 aus der Rücklauf- in die Vorlaufstellung in Richtung des Pfeiles A übergeht, während der Motor 3 aus der Vorlauf- in die Rücklaufstellung in Richtung des Pfeiles D überwechselt und ebenfalls über den Freilauf 7 nicht auf die Antriebswelle 1 einwirken kann. Dadurch wird erreicht, daß das Förderband 2 während der Taktzeiten entsprechend des eingestellten Programmes immer in Bewegung gehalten wird. Das Förderband 2 wird lediglich angehalten, um keramische Formlinge 11, und zwar insbesondere Spaltplatten vom Förderband 12 auf das Förderband 2 umsetzen zu können.

Der gewünschte Programmablauf, d. h. die zwischen den Formlingen 11 zu ziehenden Lücken wird durch stufenlose Verstellung der Kurbeltriebe 5,6 in Langlöchern 13,14 erreicht.

Das Förderband 2 steht still, wenn ein Formling 11 vom vom Förderband 12 übergesetzt wird und setzt sich danach solange in Bewegung, bis der zwischen dem nächstfolgenden Formling erforderliche Abstand erreicht ist und bleibt dann wieder bis zur Übernahme des nächstfolgenden Formlings stehen. Dies wird solange fortgesetzt, bis sich auf dem Förderband 2 eine aus einer bestimmten Anzahl Formlinge 11 gebildete Reihe entwickelt hat, die dann von einem Greifer (nicht dargestellt) ergriffen, vom Förderband 2 abgehoben und auf einen Brennwagen (nicht dargestellt) abgesetzt wird.

0011764

- 1 -

Patentansprüche:

1. Antrieb für ein intermittierend antreibbares Förderband zum Gruppieren von keramischen Formlingen, insbesondere Spaltplatten, mit auf die Antriebswelle einwirkenden Motor, dadurch gekennzeichnet,

daß die Antriebswelle (1) beidseitig mit je einem Hebel (9,10) versehen ist,

daß die Hebel (9,10) mittels Freiläufe (7,8) auf der Antriebswelle (1) angeordnet sind,

daß die Hebel (9,10) über Kurbeltriebe (5,6) mit zwei Motoren (3,4) in Verbindung stehen.

2. Antrieb nach Anspruch 1, dadurch gekennzeichnet, daß die Hebel (9,10) mit Langlöchern (13,14) zum stufenlosen Verstellen der Kurbeltriebe (5,6) versehen sind.

Fig.1

Fig. 2

0011764

Europäisches
Patentamt

EUROPÄISCHER RECHERCHENBERICHT

0011764
Nummer der Anmeldung

EP 79104464.7

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | DE - A - 2 041 826 (HAMAG) <br><br> + Seite 3, Absatz 2 - 5; Fig. 1,2 + <br><br> -- | 1 |
| A | DE - A1 - 2 702 150 (NUTS) <br><br> - Seite 5, Absatz 2 - Seite 6; Fig. 1, 2 + <br><br> -- | 1 |
| A | DE - A1 - 2 540 485 (DAHLTRON) <br><br> ÷ Seite 4, Absatz 2; Seite 10, Absatz 1, Fig. 1,2 + <br><br> -- | 1 |
| A | DE - A1 - 2 409 797 (ARDUINO) <br><br> + Seite 2, Absatz 2; Seite 2, Absatz 4 - Seite 6; Figuren 1,2 + <br><br> -- | 1 |
| A | CH - A - 361 448 (ROUBANE) <br><br> + Seite 1, Zeile 48 - Seite 2; Fig. 1 + <br><br> -- | 1,2 |
| A | GB - A - 669 198 (SEELFY) <br><br> + Seite 2, Zeile 64 - Seite 5, Zeile 50; Fig. 1 + <br><br> -- | 1 |
| A | US - A - 4 112 778 (KOROSUF) <br><br> + Spalte 2, Zeile 24 - Spalte 6, Zeile 6; Fig. 2 + <br><br> ---- | 1 |

**KLASSIFIKATION DER ANMELDUNG (Int.Cl.) 3**

B 65 G 23/38

**RECHERCHIERTE SACHGEBIETE (Int.Cl.) 3**

B 65 G 23/00

F 16 H 29/00

B 28 B

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| WIEN | 29-01-1980 | BEDNAR |

EPA form 1503.1  06.78